(19) Europäisches Patentamt / European Patent Office / Office européen des brevets

(11) **EP 3 640 914 B1**

(12) **EUROPEAN PATENT SPECIFICATION**

(45) Date of publication and mention
of the grant of the patent:
**11.12.2024 Bulletin 2024/50**

(21) Application number: **19202670.6**

(22) Date of filing: **11.10.2019**

(51) International Patent Classification (IPC):
**G08G 1/01** *(2006.01)* **G08G 1/052** *(2006.01)*
**G08G 1/08** *(2006.01)* **G08G 1/16** *(2006.01)*
**G01S 13/91** *(2006.01)* **G01S 13/92** *(2006.01)*

(52) Cooperative Patent Classification (CPC):
**G08G 1/0133; G01S 13/91; G08G 1/0145;
G08G 1/052; G08G 1/08; G08G 1/164; G08G 1/166**

(54) **SYSTEM, METHOD AND COMPUTER PROGRAM PRODUCT FOR RADAR BASED CAR ACCIDENT PREVENTION**

SYSTEM, VERFAHREN UND COMPUTERPROGRAMMPRODUKT ZUR RADARBASIERTEN AUTOUNFALLVERHÜTUNG

SYSTÈME, PROCÉDÉ ET PRODUIT-PROGRAMME D'ORDINATEUR POUR LA PRÉVENTION DES ACCIDENTS DE VOITURE À BASE DE RADAR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.10.2018 IL 26242818**

(43) Date of publication of application:
**22.04.2020 Bulletin 2020/17**

(73) Proprietor: **Elta Systems Ltd.
7710201 Ashdod (IL)**

(72) Inventor: **KASTER, Michael
7751021 Ashdod (IL)**

(74) Representative: **Tansini, Elio Fabrizio
Bugnion S.p.A.
Viale Lancetti 17
20158 Milano (IT)**

(56) References cited:
**CN-A- 106 023 618      US-A- 6 100 819
US-A1- 2005 046 597    US-A1- 2006 181 433
US-A1- 2014 032 089    US-A1- 2022 028 279**

**Description**

FIELD OF THIS DISCLOSURE

The present invention relates generally to accident prevention, and more particularly to traffic accident prevention.

BACKGROUND FOR THIS DISCLOSURE

Thousands of people die every day around the world due to car accidents. The four most common causes of fatal car accidents in the US are: distracted driving (1st place), fatigue, drunk driving, and aggressive driving (4th place). All of these causes lead in certain circumstances to red light violations. According to the Israeli Police and the Israeli Central Bureau of Statistics (CBS), the largest portion of the causes of fatal car accidents with deaths is red light violation, rising constantly from 10%-12% in the early 2000, to 20% in 2014, and keep rising.

US 2005/0046597 to Hutchison et al describes a traffic light signal system using radar-based target detection and tracking including integrating an RF emissions device, within a traffic control indicator (101) system. The system and method determines, using LFM-CW radar signals (201) and a multi-stage spectral processing algorithm (600), if object/vehicle targets enter an intersection, a radar echo response (203) will be received indicating the object/vehicle target (104) is approaching the intersection, receiving range and velocity of the object/vehicle targets (104), and determining if the object/vehicle target (104) will enter the intersection. The system and method can activate red-light-hold, green-light-extension, or left-turn-warning. The signaling system may include a traffic signal controller adapted to couple to a traffic control indicator and to control states thereof; a signal state information module having a state of a traffic control indicator; an RF transmitter operable to transmit signals toward at least one object/vehicle target; an RF receiver operable to receive reflected signals from object/vehicle target; and a radar/traffic processor coupled to the traffic signal controller and signal state information module, adapted to receive signals from the RF receiver and having an algorithm operable to determine characteristics of the object/vehicle targets and to dynamically cause the traffic signal controller to control a state of the traffic control indicator.

Other state of the art systems include:

1. JPH0546897(A) - Collision Controller
2. US7317406(B2) - Infrastructure-Based Collision Warning Using Artificial Intelligence
3. CN104575033(A) - Preventing Intersection Congestion Caused By Red Light Violation And Green Light Follow-Up Of Motor Vehicles
4. US7864072(B2) - System And Method For Automatically Adjusting Traffic Light
5. US9349288(B2) - Self-configuring traffic signal controller
6. US9558666(B2) - Collision Avoidance In Traffic Crossings Using Radar Sensors
7. KR20160092959(A) - Preventing Traffic Accidents In Crossroad For Signal Violation And Overspeed
8. US2005156757(A1) - Red Light Violation Prevention And Collision Avoidance
9. US2014307087(A1) - Methods And Systems For Preventing Traffic Accidents.

Other prior art documents include CN 106 023 618 A, US 2006/181433 A1, US 2005/046597 A1, US 6 100 819 A and US 2014/032089 A1.

Conventional staring radar can determine the direction, distance (from a given junction e.g.) and velocity of vehicles or other moving objects.

SUMMARY OF CERTAIN EMBODIMENTS

Certain embodiments of the present invention seek to provide circuitry typically comprising at least one processor in communication with at least one memory, with instructions stored in such memory executed by the processor to provide functionalities which are described herein in detail. Any functionality described herein may be firmware-implemented or processorimplemented as appropriate.

Certain embodiments seek to provide a radar based method for preventing traffic accidents.

Certain embodiments seek to achieve car accident prevention, using staring radar to prevent injuries and/or deaths.

Certain embodiments seek to provide a system for preventing car accidents within junctions, especially junctions with traffic lights.

Certain embodiments cause all other drivers to be taken out of the area of danger such that they will not get injured.

Certain embodiments seek to prevent the largest portion of causes of fatal car accidents and deaths using intervention of proved mature radar technology on traffic light state sequence control.

The system may include a subsystem e.g. staring radar, which detects and tracks vehicles approaching the junction from various directions and may include a C2 system which predicts a red light violation event, and, upon generating such a prediction, prevents other drivers from entering the junction by changing their traffic light to red.

Assuming that at a typical car accident event there is only one traffic criminal while all the other involved drivers are disciplined, certain embodiments herein are designed for taking the disciplined drivers out of the equation in order to prevent injury or death. This approach, which statistically is 'out of the box', should considerably decrease the number of fatal car accidents in junctions, especially junctions including traffic lights, and the overall number of fatal car accidents.

It is appreciated that any reference herein to, or recitation of, an operation being performed is, e.g. if the operation is performed at least partly in software, intended to include both an embodiment where the operation is performed in its entirety by a server A, and also to include any type of "outsourcing" or "cloud" embodiments in which the operation, or portions thereof, is or are performed by a remote processor P (or several such), which may be deployed off-shore or "on a cloud", and an output of the operation is then communicated to, e.g. over a suitable computer network, and used by, server A. Analogously, the remote processor P may not, itself, perform all of the operations and instead, the remote processor P itself may receive output/s of portion/s of the operation from yet another processor/s P', may be deployed off-shore relative to P, or "on a cloud", and so forth.

The present invention is defined by the appended claims.

The embodiments defined by the claims, and other embodiments, are described in detail in the next section.

Any trademark occurring in the text or drawings is the property of its owner and occurs herein merely to explain or illustrate one example of how an embodiment of the invention may be implemented.

Unless stated otherwise, terms such as, "processing", "computing", "estimating", "selecting", "ranking", "grading", "calculating", "determining", "generating", "reassessing", "classifying", "generating", "producing", "stereo-matching", "registering", "detecting", "associating", "superimposing", "obtaining", "providing", "accessing", "setting" or the like, refer to the action and/or processes of at least one computer/s or computing system/s, or processor/s or similar electronic computing device/s or circuitry, that manipulate and/or transform data which may be represented as physical, such as electronic, quantities e.g. within the computing system's registers and/or memories, and/or may be provided on-the-fly, into other data which may be similarly represented as physical quantities within the computing system's memories, registers or other such information storage, transmission or display devices or may be provided to external factors e.g. via a suitable data network. The term "computer" should be broadly construed to cover any kind of electronic device with data processing capabilities, including, by way of nonlimiting example, personal computers, servers, embedded cores, computing system, communication devices, processors (e.g. digital signal processor (DSP), microcontrollers, field programmable gate array (FPGA), application specific integrated circuit (ASIC), etc.) and other electronic computing devices. Any reference to a computer, controller or processor is intended to include one or more hardware devices e.g. chips, which may be co-located or remote from one another. Any controller or processor may for example comprise at least one CPU, DSP, FPGA or ASIC, suitably configured in accordance with the logic and functionalities described herein.

The present invention may be described, merely for clarity, in terms of terminology specific to, or references to, particular programming languages, operating systems, browsers, system versions, individual products, protocols and the like. It will be appreciated that this terminology or such reference/s is intended to convey general principles of operation clearly and briefly, by way of example, and is not intended to limit the scope of the invention solely to a particular programming language, operating system, browser, system version, or individual product or protocol. Nonetheless, the disclosure of the standard or other professional literature defining the programming language, operating system, browser, system version, or individual product or protocol in question, is incorporated by reference herein in its entirety.

Elements separately listed herein need not be distinct components and alternatively may be the same structure. A statement that an element or feature may exist is intended to include (a) embodiments in which the element or feature exists; (b) embodiments in which the element or feature does not exist; and (c) embodiments in which the element or feature exist selectably e.g. a user may configure or select whether the element or feature does or does not exist.

Any suitable input device, such as but not limited to a sensor, may be used to generate or otherwise provide information received by the apparatus and methods shown and described herein. Any suitable output device or display may be used to display or output information generated by the apparatus and methods shown and described herein. Any suitable processor/s may be employed to compute or generate information as described herein and/or to perform functionalities described herein and/or to implement any engine, interface or other system described herein. Any suitable computerized data storage e.g. computer memory may be used to store information received by or generated by the systems shown and described herein. Functionalities shown and described herein may be divided between a server computer and a plurality of client computers. These or any other computerized components shown and described herein may communicate between themselves via a suitable computer network.

BRIEF DESCRIPTION OF THE DRAWINGS

Fig. 1a is simplified flowchart illustration of methods which include description of the system components and installation, all in accordance with certain embodiments.

Figs. 1b,2a are simplified flowchart illustrations of real-time computational operations, all or any subset of which may be performed by processor/s, all in accordance with certain embodiments.

Fig. 2b is a simplified flowchart illustration of methods which include intervening the traffic light state and revert to normal working.

Figure 3 is a graph showing a boundary between safe-pass and must-stop states of vehicle approaching an intersection, and estimated time to enter the intersection as a function of range and radial velocity for constant velocity case

Figure 4 is a graph showing a boundary between safe-stop and hazardous states of a subset of vehicles approaching the junction and considered as must-stop vehicles, and estimated time to enter the intersection as a function of range and radial velocity for an example decelerating rate of -3.9m/sec2 (-12.8ft/sec2) which is considered as aggressive braking.

Figure 5 is a graph which represents a test case of a traffic light, where the period of time for blinking-green state and yellow state is assumed for simplicity to be 3sec each (6sec total).

Figure 6 is a graph which represents a test case of a traffic light, where the period of time for yellow state is 3sec and assumes there is no blinking-green interim state.

Methods and systems included in the scope of the present invention may include some (e.g. any suitable subset) or all of the functional blocks shown in the specifically illustrated implementations by way of example, in any suitable order e.g. as shown.

Computational, functional or logical components described and illustrated herein can be implemented in various forms, for example, as hardware circuits such as but not limited to custom VLSI circuits or gate arrays or programmable hardware devices such as but not limited to FPGAs, or as software program code stored on at least one tangible or intangible computer readable medium and executable by at least one processor, or any suitable combination thereof. A specific functional component may be formed by one particular sequence of software code, or by a plurality of such, which collectively act or behave or act as described herein with reference to the functional component in question. For example, the component may be distributed over several code sequences such as but not limited to objects, procedures, functions, routines and programs and may originate from several computer files which typically operate synergistically.

Each functionality or method herein may be implemented in software (e.g. for execution on suitable processing hardware such as a microprocessor or digital signal processor), firmware, hardware (using any conventional hardware technology such as Integrated Circuit Technology) or any combination thereof.

Functionality or operations stipulated as being software-implemented may alternatively be wholly or fully implemented by an equivalent hardware or firmware module and vice-versa. Firmware implementing functionality described herein, if provided, may be held in any suitable memory device and a suitable processing unit (aka processor) may be configured for executing firmware code. Alternatively, certain embodiments described herein may be implemented partly or exclusively in hardware in which case some or all of the variables, parameters, and computations described herein may be in hardware.

Any module or functionality described herein may comprise a suitably configured hardware component or circuitry. Alternatively or in addition, modules or functionality described herein may be performed by a general purpose computer or more generally by a suitable microprocessor, configured in accordance with methods shown and described herein, or any suitable subset, in any suitable order, of the operations included in such methods, or in accordance with methods known in the art.

Any logical functionality described herein may be implemented as a real time application, if and as appropriate, and which may employ any suitable architectural option such as but not limited to FPGA, ASIC or DSP or any suitable combination thereof.

Any hardware component mentioned herein may in fact include either one or more hardware devices e.g. chips, which may be co-located or remote from one another.

Any method described herein is intended to include within the scope of the embodiments of the present invention also any software or computer program performing some or all of the method's operations, including a mobile application, platform or operating system e.g. as stored in a medium, as well as combining the computer program with a hardware device to perform some or all of the operations of the method.

Data can be stored on one or more tangible or intangible computer readable media stored at one or more different locations, different network nodes or different storage devices at a single node or location.

It is appreciated that any computer data storage technology, including any type of storage or memory and any type of computer components and recording media that retain digital data used for computing for an interval of time, and any type of information retention technology, may be used to store the various data provided and employed herein. Suitable computer data storage or information retention apparatus may include apparatus which is primary, secondary, tertiary or off-line, which is of any type or level or amount or category of volatility, differentiation, mutability, accessibility, addressability, capacity, performance and energy use, and which is based on any suitable technologies such as semiconductor, magnetic, optical, paper and others.

DETAILED DESCRIPTION OF CERTAIN EMBODIMENTS

Conventionally, each traffic light is associated with an existing traffic light control box which has a given policy regarding traffic light states.

According to certain embodiments, staring radar and an associated C2 system in data communication therewith, is installed at a junction. The C2 may be in data communication with the existing traffic light control box e.g. via Ethernet, for example, the existing traffic light control system may include a protocol to override the existing control system's policy.

According to certain embodiments, a method is provided which first differentiates vehicles which should stop so as not to enter the junction during a red light, e.g. since their velocity and distance from the junction is such that they cannot clear the junction before the red light, from vehicles which need not stop e.g. since their velocity and distance from the junction is such that they can clear the junction before the red light. Then, the method differentiates (e.g. given their velocity and distance from the junction) vehicles which should stop, but cannot, from vehicles which should stop, and can do so. The method intervenes in traffic light control only when vehicles which should stop, but cannot do so, are encountered.

According to certain embodiments, a method is provided which comprises:

Determining, at least once per vehicle, whether this vehicle, judging e.g. by its distance from the junction and its radial velocity, belongs to a first category of vehicles who are capable of passing the junction before the traffic light reverts to red, or to a second category of vehicles who are incapable of passing the junction before the traffic light reverts to red and therefore should be planning-to-stop before the traffic light reverts to red; and processing the two categories of vehicles differently, including monitoring each vehicle in the second category and as soon as a vehicle in the second category (but not in the first category) is found to be going too fast to stop within the distance remaining between that vehicle to the junction edge, intervene in the traffic light's control.

A particular advantage of such a system and other embodiments herein may be that differentiating the two categories of vehicles reduces false alarms considerably, to a level which makes the system workable and operational. Another particular advantage may be that the traffic control box is triggered to engage a transit-to-red sequence for all directions, rather than merely delaying the green light. A great contributor to traffic accidents, in which the offender runs the red light, is a subset of the second category, which is peopled by drivers who should be stopping, but who, instead, drive too fast and/or are engaged with their cellphones and do not notice that they are driving too fast and/or do not notice that they are approaching a traffic light at all, and/or are drunk and/or under the influence of narcotics and/or fatigued, or asleep. Some or all these high-risk instances can be detected by identifying those who are not capable of stopping before the junction (and intervening in the traffic light control to foil the impending accident). However, many vehicles in the first category are also incapable of stopping before the junction, which is not a problem since these vehicles are capable of passing the junction in time. Therefore, to prevent instances in the first category from causing an unacceptable false alarm rate, vehicles are first subdivided into the above two categories, and only then, does the server or C2 monitor for vehicles from the second category and intervene with the traffic light control upon identifying same, typically for these vehicles only. Alternatively, or in addition, the server or C2 may monitor for vehicles going too fast to stop and intervene with the traffic light control upon identifying same, for vehicles within the second category only, and not for vehicles within the first category.

Another advantage of certain embodiments is low technology risks e.g. the system may be based on proven and mature components, and nonetheless can provide a good solution to a large portion of fatal car accidents.

Also, the traditional, intuitive doctrine of fighting fatal car accidents was based on penalizing traffic criminals, and involved deprivation of driving license, fines, preventive driving courses, etc. However, advantageously, none of this contradicts embodiments shown and described herein, since the criminal driver who caused the event may be photographed and penalized, using traditional doctrines.

Also, certain embodiments are applicable even for road intersections having no traffic lights, e.g. by deploying at such junctions any kind of alert device, such as a flashing light, to inform other drivers that a vehicle is approaching the intersection at a speed which will not enable that vehicle to stop.

Another advantage of certain embodiments is that while the system does not predict all red light violations, system failures tend to occur, especially for vehicles travelling at low velocities, which is precisely where the severity of injuries is typically low.

Other advantages of certain embodiments include all or any subset of: radar-based, hence all weather, all day system, high degree of situation awareness, radar based (hence accurate), range and velocity measurement of vehicles approaching the intersection, and low false alarms rate compared to conventional electro-optical sensors.

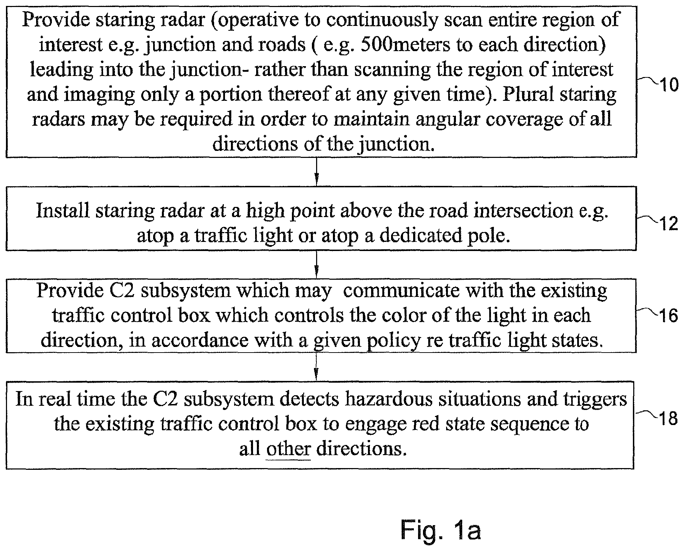

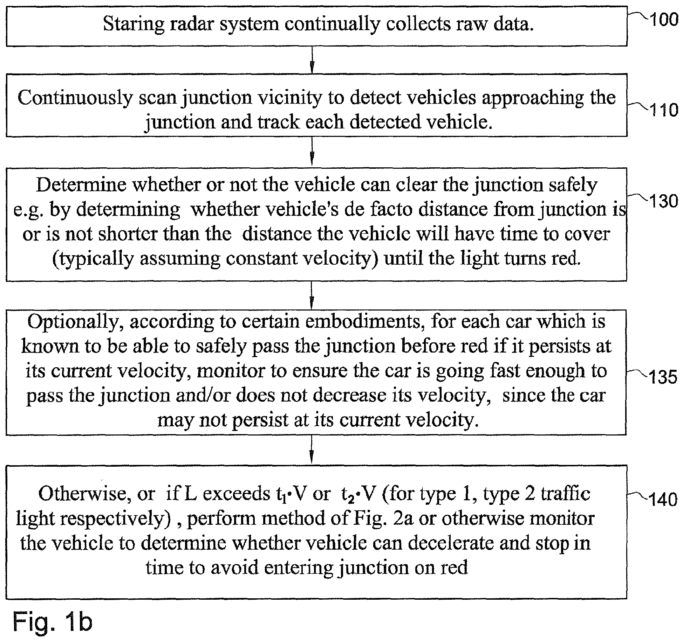

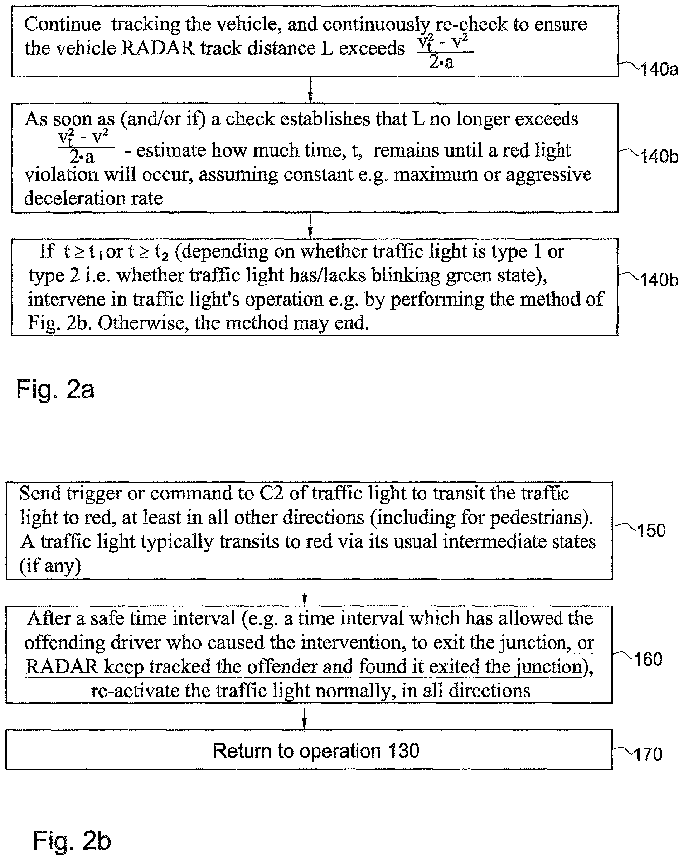

A per-junction setup process is now described with reference to operations 10, 12, 16 in Fig. 1a, followed by a description of real-time operations e.g. as illustrated in Figs. 1b, 2a, 2b.

Reference is now made to the per-junction setup process of fig. 1a, all or any subset of which may be performed. 10: provide staring radar (operative to continuously scan entire region of interest e.g. junction and roads (e.g. 500 meters to each direction) leading into the junction, rather than scanning the region of interest and imaging only a portion thereof at any given time). Plural staring radars may be required in order to maintain angular coverage of all directions of the junction.

A staring radar subsystem may be installed on a high point above the road intersection e.g. atop a traffic light or a dedicated pole.

The subsystem may comprise high resolution radar e.g. with simultaneous multi-beam technology which may provide persistent surveillance and/or instantaneous target tracking over an entire region of interest (ROI) typically including immediate and simultaneous detection, monitoring and tracking of vehicles in the ROI. The subsystem may comprise a stationary (nonrotating) planar array covering a sector of 90 degrees with detection range capabilities of up to 1,000 meters for moving vehicles. Characteristics may include all or any subset of the following characteristics:

- Up to four fixed directions of line of sight
- Detecting and tracking vehicles from at least 500m
- Very accurate ranging and velocity estimation
- Low false alarm rate
- Update rate of at least 10Hz
- Low power consumption (e.g.: POE - power on Ethernet)
- Multi-beam solid-state FMCW radar
- Command and control application provides tactical picture of several networked radars and cameras
- High accuracy, automatic and continuous multi-target detection and tracking
- Instantaneous and continuous coverage
- Interoperability with electro-optic sensors and command and control systems
- Simple deployment and operation
- Maintenance-free with low Life Cycle Cost (LCC)
- Azimuth coverage 90°
- Range accuracy 0.5 m
- Vehicle Detection range (RCS 10m$^2$) 1000m
- Azimuth accuracy 1°
- Minimum radial velocity 0.5 m/s
- Elevation coverage 15°

An example of a staring radar system which enjoys a CE & FCC certification mark ensuring electromagnetic radiation safety for people and materials
is Israel Aircraft Industries': ELM-2114 - Persistent Perimeter Detection Radar (http://www.iai.co.il/2013/34481-48768-en/Groups_ELTA EltaNumber_Products-ELM.aspx).

The staring radar subsystem typically continuously provides tracks information regarding vehicles approaching the road intersection, which includes direction of the track, range and radial velocity of the track.

12: install staring radar at a high point above the road intersection e.g. atop a traffic light or atop a dedicated pole. The staring radars are typically installed at a point high enough to provide a line of sight to the entire region of interest, without occlusions.

16: provide C2 subsystem which may communicate with the existing traffic control box which controls the color of the light in each direction, in accordance with a given policy re traffic light states. For each traffic light in the junction, the traffic control box typically has at least one of the following two capabilities: separate control for each traffic light in the junction, or a special mode for entering red state for all traffic light "directions' in the junction (analogous to entering a blinking-yellow state for all traffic-lights in all directions, in an event of malfunctioning).

The C2 subsystem is typically in data communication with the staring radar subsystem. In addition, the C2 subsystem may be connected to the existing traffic light control box e.g. via Ethernet. For example, the existing traffic light control system may include a protocol supporting external overrides of the existing control system's policy, and the C2 subsystem may, when it is necessary to cause a traffic light in some or all directions, to transmit to red, communicate with the existing traffic light control system via that protocol.

Typically, the policy of the traffic light (e.g. schedule for transiting from green to red via intermediate states) is known to the C2 subsystem, and the C2 subsystem's algorithm to predict red light violation is configured accordingly e.g. as described herein.

18: In real time, the C2 subsystem detects hazardous situations and triggers the existing traffic control box to engage red state sequences to all directions.

Reference is now made to fig. 1b which illustrates real-time operations, all or any subset of which may be performed e.g. to implement operation 18 of Fig. 1a.

100: staring radar system continually collects raw data.

110: continuously scan junction vicinity to detect vehicles approaching the junction and track each detected vehicle.

Typically, the staring radar subsystem continually processes the raw data to detect all vehicles approaching the junction aka intersection from all directions. The staring radar system tracks each vehicle detected using conventional moving target tracking functionality e.g. radar tracker, typically until the vehicle is found to have passed the junction. Typically, data generated by the radar includes a "list" of each track (or moving object) identified by the radar's tracker https://en.wikipedia.org/wiki/Radar_tracker , and for each such moving object, its range, current position according to radar's coordinate system, and velocity.

Typically, the C2 calibrates or converts a raw range provided by staring radar into "distance of car's front end from the edge of the junction". This may be calibrated while installing the staring radar (e.g. if the staring radar is installed at the edge of the junction, the calibration factor (to be added e.g.) will be 0m, if the staring radar is installed 10m behind the edge (into the junction), the calibration factor will be -10m, if the staring radar is installed 10m after the edge (outside of the junction), the calibration factor will be + 10m, etc.).

Typically, the C2 subsystem is configured to:

First determine (e.g. as per operation 130 and 140 herein) if the instance vehicle should, in order to avoid being present in the junction during a red light, pass the junction, or stop. For example, a vehicle very close to the junction should not attempt to stop, because it will be unable to stop safely in the very short distance available. Conversely, a vehicle very far from the junction should decelerate and stop, because it will be unable to pass the junction without entering on red.

Then, if it is determined (e.g. in operation 130 and 140 herein) that an instance vehicle should stop before the junction, the C2 subsystem (e.g. in operation 140a onward herein) monitors the vehicle to ensure the vehicle is taking proper action to stop, and moves to intervene in the traffic light states in other directions if the vehicle due to not having taken proper action (not having decelerated in a timely manner i.e.) and is predicted to be about to enter the junction on red (e.g. by performing operations 140a onward, described herein in detail). If vehicle is a "planning-to-stop" vehicle, verify that the vehicle can stop, given the vehicle's current velocity, within the distance that currently separates it from the junction.

If able to stop, verify the driver is implementing this ability by monitoring until the vehicle stops, or has achieved a given velocity, e.g. a velocity pre-tested to be low enough to ensure an acceptable level of safety e.g. ~10meter/sec. for example. In some use cases, vehicles may approach the junction and eventually make a right turn from the same lane. It is appreciated that junctions in which the right turn is performed at higher speeds, typically have a separate lane for vehicles taking a right turn.

If the vehicle is found to be unable to stop, identify a "predicted red light violation event" and trigger the traffic light C2 to engage red light sequence to all other directions.

Typically, for each tracked vehicle, operations 130, 140 may be performed e.g. when the light changes from green to its next state (say yellow, or blinking-green), to determine whether vehicle can safely pass the junction without decelerating, or to determine whether vehicle belongs to category 1 or 2. Typically, when the light changes to blinking-green (or to yellow) the C2 is operative to determine how long it will take this vehicle to arrive at the junction, assuming it maintains its current speed.

130: determine whether or not the vehicle can clear the junction safely e.g. by determining whether vehicle's de facto distance from junction is or is not shorter than the distance the vehicle will have time to cover (typically assuming constant velocity) until the light turns red.

Typically, if the vehicle radar track distance $L \leq t_1 \cdot V$ or $L \leq t_2 \cdot V$ (depending on whether traffic light is type 1 or type 2 i.e. whether traffic light has/lacks blinking green state), where

L = current distance of vehicle from edge of the junction (current vehicle radar track distance )

V = vehicle's current radial velocity,

$t_1$ = known time interval between end of green light state to beginning of red light state for yellow-only (no blinking green) traffic lights aka type 1 traffic lights (3 seconds in Israel)

$t_2$ = known time interval between end of green light state to beginning of red light state for traffic lights with blinking-green and yellow states aka type 2 traffic lights (3 + 3 = 6 seconds in Israel)

then end, including stopping the tracking of this vehicle and removing the vehicle from the list of vehicles to be monitored/tracked.

L may, depending on the use-case, be defined as "distance of vehicle's back end, from far end of junction", or as "distance of vehicle's front end, from near end of junction". The definition of L depends inter alia on precise use-case requirements. For example, there are use-cases in which vehicles are prohibited e.g. by law from entering a junction in a red light, whereas it is permissible for the vehicle to enter a junction while the light is blinking-green or yellow, even if the vehicle clears the junction only after the light is actually red.

135: optionally, according to certain embodiments, for each car which is known to be able to safely pass the junction before red if it persists at its current velocity, monitor to ensure the car is going fast enough to pass the junction (e.g. since the car may not persist at its current velocity) and/or to ensure the car does not decrease its velocity. Alternatively, however, e.g. if statistically accidents are believed not to be caused by this profile of vehicle, this operation may be omitted. 140: Otherwise, i.e. if L exceeds $t_1 \cdot V$ or $t_2 \cdot V$ (for type 1, type 2 traffic light respectively), perform method of Fig. 2a, or otherwise monitor the vehicle to determine whether vehicle can decelerate and stop on time to avoid entering junction on red.

Typically the C2 is configured to determine, at least once per vehicle, whether this vehicle, judging e.g. by its distance from the junction and its radial velocity, can stop safely or predicted to make a red light violation.

Reference is now made to Fig. 2a which illustrates real-time operations, all or any subset of which may be performed e.g. to implement operation 140 of Fig. 1b.

140a: continue tracking the vehicle, and continuously re-check to ensure the vehicle radar track distance L exceeds $\frac{V_t^2 - V^2}{2 \cdot a}$

Typically, a vehicle radar track is a can-safely-stop-vehicle. This instance may be further tracked until stopping or achieving low enough velocity, and verify it keeps its status (can-safely-stop). If not, the vehicle is typically declared a cannot-stop-vehicle and may be examined using operation 140b.

140b: as soon as (and/or if) a check establishes that L no longer exceeds $\frac{V_t^2 - V^2}{2 \cdot a}$ - estimate how much time, t, remains until a red light violation will occur, assuming constant e.g. maximum or aggressive deceleration rate, e.g. by solving $L = \frac{1}{2} a \cdot t^2 + V \cdot t$ for t, where a is pre-determined maximum deceleration rate the vehicle is capable of (e.g. as obtained by slamming on the brakes). Typical value for a = -3.858m/sec2 for passenger cars which are the most common vehicles. For larger vehicles (e.g. trucks) the maximum deceleration rate is typically even lower, such that a single (conservative) value may be used for all types of vehicles (cars, trucks etc.) by selecting "a" to be safe enough for all categories.

In certain embodiments, different a values can be applied to different categories of vehicles respectively.

$V_t$ is the final velocity (in the case of stopping $V_t$ equals 0).
t = time which remains until the vehicle enters the junction - assuming constant maximum deceleration rate, a

140c: If $t \geq t_1$ or $t \geq t_2$ (depending on whether traffic light is type 1 or type 2 i.e. whether traffic light has/lacks blinking green state), intervene in traffic light's operation e.g. by performing the method of Fig. 2b. Otherwise, the method may end.

It is appreciated that the latency times of the radar and of the C2 are both by far shorter than the above time periods, hence are negligible.

The C2 subsystem intervenes in the traffic light sequence e.g. by communicating with the existing traffic light control box and by overriding the box's policy re traffic light states, causing all directions to immediately (but subject to the traffic light sequence policy) switch from the traffic light's current state in that direction, to red, typically using the usual temporal sequence for proceeding from that state to red. For example, if in one direction the light has just turned green, the override may cause the light in that direction to immediately, via one or more intermediate states determined by the light's policy for that direction, each for the customary period of time determined by the light's policy for that direction (e.g. blinking green light state for 3sec, then yellow for 3 sec), proceed to red.

Reference is now made to Fig. 2b which illustrates real-time operations, all or any subset of which may be performed e.g. to implement operation 140c of Fig. 2a.

150: send trigger or command to C2 of traffic light to transit the traffic light to red, at least in all other directions (including for pedestrians). Optionally, stop tracking vehicles in junction vicinity, since decision has already been made, but monitor the offender to determine when he passed the junction and the hazardous situation has ended, at which point the traffic light can be commanded to or allowed to revert to its normal routine.

A traffic light typically transits to red via its usual intermediate states if any e.g. yellow and perhaps blinking green as well. However, optionally, trigger commands C2 to shorten blinking green (if any) and yellow states, at least in all other directions, e.g. from 3sec each to 2sec each.

160: after a safe time interval (e.g. a time interval which has allowed the offending driver who caused the intervention, to exit the junction), re-activate the traffic light normally, in all directions, e.g. as is conventionally done when a traffic light "recovers" from blinking yellow or other non-operational state e.g. as a result of a power cut or maintenance, or other malfunction. Typically, C2 controls the light to "recover" from the override event in the operation above. Typically, after the staring radar indicates that the hazardous situation that caused the override event has ended, e.g. that the tracked criminal driver has passed the junction, the control box may recover the same way it is programmed to recover from conventional "traffic light not working" state (e.g. blinking yellow); typically, the recovery involves re-starting the normal protocol at a suitable point e.g. two opposite directions become red, and all other directions become green.

170: return to operation 130.

It is appreciated that typically, when the light is red, the system assumes all drivers will decelerate. However, when the light is in an interim state, the system assumes that drivers deliberate, arrive at a decision as to whether to stop or to "make the light" (clear the junction before the light turns red), such that when the light is in an interim state, two subpopulations or categories may be defined as described herein.

The system herein typically alters/intervenes in the traffic light state using the protocol e.g. sequence and timing that the traffic light control box normally uses. So, for example, if the traffic light control system normally passes from green to red via a 3-second blinking-green time window followed by a 3-second yellow time window, the logic herein typically only intervenes if a driver is predicted to enter the junction on a red light, and if the driver's speed and distance are such, when the prediction is made, that the driver will only reach the junction in $S \geq 3 + 3$ seconds. Or, if the traffic light control system normally passes from green to red via 2-second yellow time window, with no blinking green time window, the logic herein typically only intervenes if a driver is predicted to enter the junction on a red light, and if the driver's speed and distance are such, when the prediction is made, that the driver will only reach the junction in $S \geq 2$ seconds.

It is appreciated that certain embodiments herein do not intervene if a driver is driving so slowly (say, less than 40 kph), that the prediction that he is about to enter the junction on a red light can only be made when the driver is too close to the junction to allow the other directions to safely be changed to red. However, note that such a driver typically runs a low risk of causing a fatal traffic accident since speed is a relevant contributory factor to fatality of a collision accident. This is because high relative velocity of colliding vehicles is associated with fatality, however relative velocity is of course a function of each vehicle's velocity.

The logic herein uses the rule that an intervention (command to turn traffic lights in all or some directions) is only made if and when it is determined that the driver's speed and distance from the junction are such that he will run the red light even if he decelerates maximally (e.g. decelerates at a rate of -3.9 m/sec$^2$). Alternatively however, other rules may be used e.g. intervention only if the driver has reached a distance from the light which, given his velocity and deceleration, corresponds to the minimal time period t which is required to intervene, and predefined criteria suggesting that the driver may run the red light, are present e.g. that the driver is speeding, that the weather is poor, or any combination thereof; conversely, if, when the driver reaches the distance from the light which, given his velocity and deceleration, corresponds to minimal time period t, and predefined criteria suggest that the driver will not run the red light, no intervention is initiated.

It is appreciated that certain embodiments assume there is a maximum deceleration rate (e.g. as achieved by slamming on the brakes).

Also, certain embodiments assume that the maximum deceleration rate is generally uniform over vehicles, at least for all cars, as opposed to trucks and larger vehicles.

Also, certain embodiments assume a maximum deceleration rate of -3.9 m/sec$^2$ and/or that human reaction time (e.g. in deciding upon seeing an interim traffic light state, whether to pass the junction, or to stop) is 0.75 sec. However, these parameters are not intended to be limiting and may, if desired, be determined in advance by suitable pre-experimentation.

It is appreciated that certain embodiments assume that the system has only a binary decision to make e.g. intervene in the traffic light control or not (and/or provide oral warning or not). However, according to certain embodiments, an additional decision category may exist e.g. whether or not to generate a warning using suitable technology such as V2V or V2I. In this case, the graphs shown and described herein as having a single boundary between an ok, don't intervene zone/region and a "need to intervene" zone or region, may be replaced by graphs having two boundaries e.g. between three respective zones or regions including a "middle" region in which a warning is provided.

It is appreciated that certain embodiments are useful even for autonomous vehicles, since such vehicles also can run a red light e.g. due to poor weather conditions causing poor control over the car and/or poor visibility and/or due to algorithmic errors or malfunctioning sensors, communication elements and so forth, and get involved as one of the disciplined vehicles.

It is appreciated that any temporal scheme may be employed to revert to normal traffic control, once an intervention triggered by the system herein has terminated e.g. once the radar system has confirmed that the vehicle which triggered the intervention has exited the junction. Such temporal schemes are known; for example, such schemes are employed subsequent to a "flashing yellow" traffic light state which occurs inter alia when the traffic light is out of order.

Another example is that according to certain embodiments the method might be configured such that the traffic light sequence works normally with no intervention of the presented system, for as long as the range and radial velocity of a track does not reflect any possibility of a red light violation event. There may be a boundary between safe and hazardous combinations of range and radial velocity of a given track. As long as a vehicle track is located within a safe area, the vehicle track has a combination of range and radial velocity such that the vehicle could stop safely without causing a red light violation event. However, when a vehicle track enters a non-safe area, the vehicle track has a combination of range and radial velocity such that the vehicle could not stop before the intersection and is at high risk to cause a red light violation event and consequent car accident.

When a vehicle track crosses the boundary between a safe stop area or zone, and a can't stop area or zone, the system may be configured for intervening in the traffic light sequence and engaging a red light state to all other directions of the intersection. In order not to surprise other drivers, this is typically done via the normal sequence, say: blinking green light state for 2sec (where applicable), and yellow light state for another 2sec, and then the red light state.

Generally, it is appreciated that the criteria for triggering a red state in all directions, may or may not be precisely as described herein.

According to certain embodiments, the system determines if a driver's velocity and distance from the junction are such that the driver will enter the junction on red (will arrive at the junction at a positive velocity), even if he decelerates immediately and maximally. However, other criteria or algorithms for predicting red light violations may be employed.

Any suitable computation may be employed to predict a redlight violation. An example of a possible variation is the use of case-based trained deep neural networks.

More generally, it is appreciated that the above operations (Figs. 1a-2b), all or any subset of which may be provided, in any suitable order e.g. as shown in each of Figs. 1a - 2b, are but one possible set of embodiments which operationalize safety-motivated traffic light control based on radar deployed at junctions.

Typically it is desired to predict that a car is about to enter the junction on a red light before this occurs, and, responsive to this prediction, to cause the traffic light to turn red in all other directions, or in a subset of the other directions, all typically until the offending vehicle has vacated the junction.

However any prediction technique, not necessarily that particularly shown and suggested herein, may be employed. Prediction could involve seeking out drivers who might not stop in time (might not stop before the light turns red e.g.). However, this may cause an unacceptable number of false alarms due to vehicles being caught in the "net" of this prediction, because they indeed will not stop in time, but do not need to do so, because the vehicle intends to, and is about to, clear the junction timely e.g. before the light turns red.

Therefore, according to certain embodiments, prediction includes first dividing drivers (or vehicles) into 2 categories:

Category 1: those vehicles close enough to the junction considering their velocity, to clear the junction.

Category 2: those vehicles who must stop e.g. because their distance from the junction is far enough, e.g. considering their velocity, to require a stop.

Then, the method may then process only those vehicles in category 2. And only for those vehicles, the method may determine if one of them, in category 2, is going too fast to stop in time (given its range from the junction). Only then will the traffic light be triggered to transit to red in all other directions, or in a subset of the other directions, thereby to yield a workable method, which, statistically, provides safety from all or most collisions with vehicles which have run a red light, without generating an unacceptably high false alarm rate.

For methods which employ a 2-stage prediction flow, it is appreciated that any computation e.g. on raw data generated by the staring radar, not necessarily the computations described herein by way of example, may be employed to decide which car "should go" and which "should stop" or to assign vehicles to these two categories namely the (first) category of vehicles who are capable of passing the junction before the traffic light reverts to red, or the (second) category of vehicles who are incapable of passing the junction before the traffic light reverts to red, and therefore should be planning-to-stop before the traffic light reverts to red. For example, machine learning or neural networks may be employed to assign vehicles to the two categories, e.g. by generating a training set with known outcomes (vehicles which eventually cleared the junction safely vs. vehicles which stopped before the light turned red).

Also, any computation e.g. on raw data generated by the staring radar, not necessarily the computations described herein by way of example, may be employed to decide which car is not going to achieve its objective for at least one category e.g. which vehicles are supposed to stop, but cannot do so safely (statistically, many or most junction collision accidents are due to this class of vehicles).

According to certain embodiments, the method is configured for monitoring each vehicle in the second category, and as soon as a vehicle in the second category (but not in the first category) is found to be going too fast, to stop within the distance remaining between that vehicle to the junction edge, and intervene in the traffic light's control.

However, other differentials processing the two categories of vehicles, may be employed. The "required" braking distance as a function of the initial velocity may for example be computed by the following rule of thumb for aggressive deceleration taken from the Israeli police traffic investigation department (formula c):

$$L_{braking_{[m]}} \cong \left(\frac{V_{[km/h]}}{10}\right)^2 = \left(\frac{3.6 \cdot V_{[m/s]}}{10}\right)^2$$

The deceleration rate may then be computed as (formula d):

$$a_{[m/s^2]} = \frac{-V_{[m/s]}^2}{2 \cdot L_{braking_{[m]}}} = -3.858_{[m/s^2]} = -12.654_{[ft/s^2]}$$

A common acceptable rate for aggressive deceleration is -12.5ft/sec$^2$ therefore the above rule of thumb is also acceptable. Finally, the elapsed time for a vehicle to arrive at the intersection as a function of range and velocity, may be computed for the two extremums. If a vehicle is not trying to stop, but it continues moving with a constant velocity, the elapsed time for arriving at the intersection may then be computed as (formula e):

$$t_{[sec]} = \frac{L_{[m]}}{V_{[m/s]}}$$

If a vehicle is aggressively decelerating, the elapsed time for the vehicle to arrive at the intersection may then be computed as (formulae f, g, h respectively):

$$V_t^2 - V^2 = 2 \cdot a \cdot L$$

$$V_t = V + a \cdot t$$

$$t_{[sec]} = \frac{-V_{[m/s]} + \sqrt{V_{[m/s]}^2 + 2 \cdot a_{[m/s^2]} \cdot L_{[m]}}}{a_{[m/s^2]}}$$

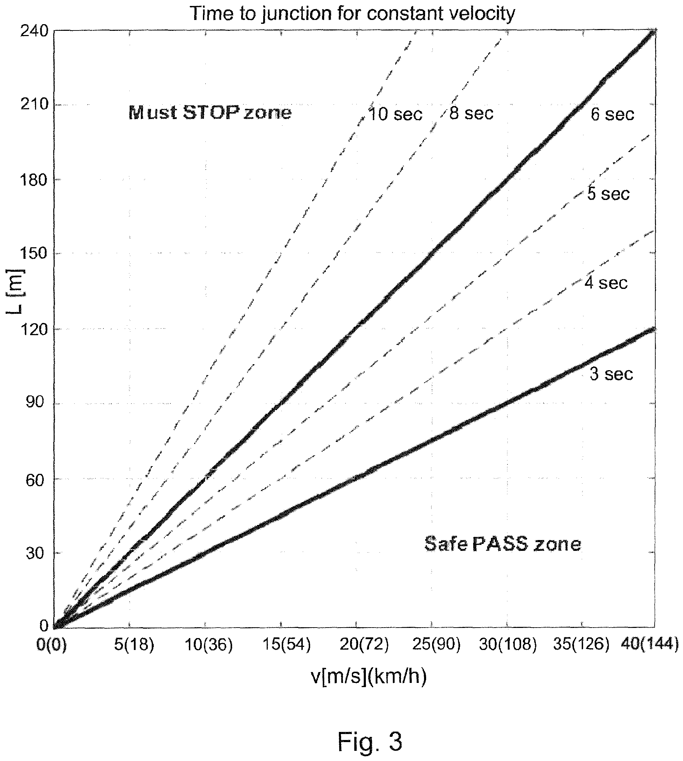

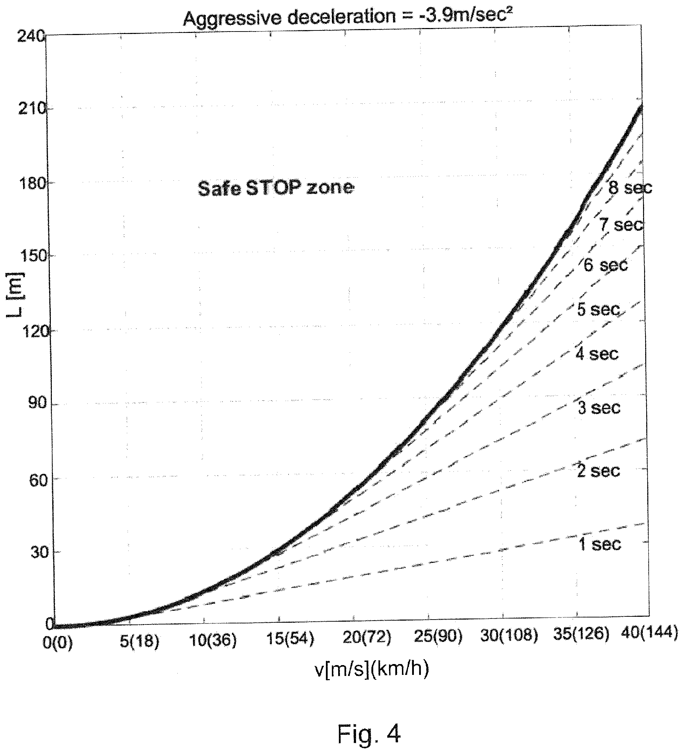

Figure 3 is a graph which, according to certain embodiments, represents the time it takes a vehicle to arrive at the junction at a constant velocity, as a function of range from the junction and velocity. This graph should be considered when the light changes from green to blinking-green (refer to the upper bold line) or from green to yellow (refer to the lower bold line). By way of example, the durations of the blinking-green and the yellow states are taken to be 3sec each, but these may alternatively be set up for any period of time. In each case, if the vehicle radar track is located below the bold line, the vehicle can safely pass the junction before the red light appears, assuming the vehicle proceeds with its current constant velocity. However, if the vehicle radar track is located above the bold line, the vehicle should stop before entering the junction. for those vehicles that should stop before entering the junction consider the graph of Figure 4.

Figure 4 is a graph which, according to certain embodiments, represents the braking distance as a function of velocity for an aggressive deceleration (bold line) and the time it takes a vehicle to actually arrive at the junction during a red light as a function of range and velocity (dashed lines). Once determined (from Figure 3) that a vehicle should stop before entering the junction, as long as the vehicle radar track is located above the bold line, the vehicle can safely stop before arriving the junction. However, if the vehicle radar track is located below the bold line, the vehicle cannot (or does not intend to) stop, and the system is therefore typically configured for sending a trigger to the traffic light control box, to revert to a red state in all other directions (typically according to the traffic light's existing policy for transiting from green to red via intermediate state/s).

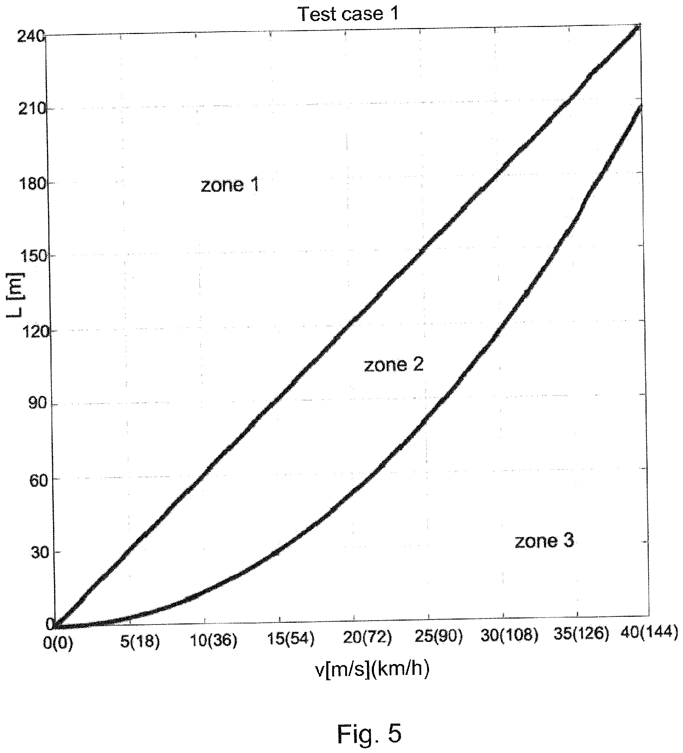

Figure 5 is a graph which according to certain embodiments represents a test case of a traffic light, where the period of time for blinking-green state and yellow state is assumed for simplicity to be 3sec each (6sec total). Zone 1 represents the locations of vehicle radar tracks (when the light changes from green to blinking-green) whose corresponding vehicles should stop before entering the junction. Zone 2 represents the locations of vehicle radar tracks (when the light changes from green to blinking-green) whose vehicles are not obliged to stop before entering the junction, although they may. Zone 3 represents the locations of vehicle radar tracks (when the light changes from green to blinking-green) whose vehicles should pass the junction without stopping.

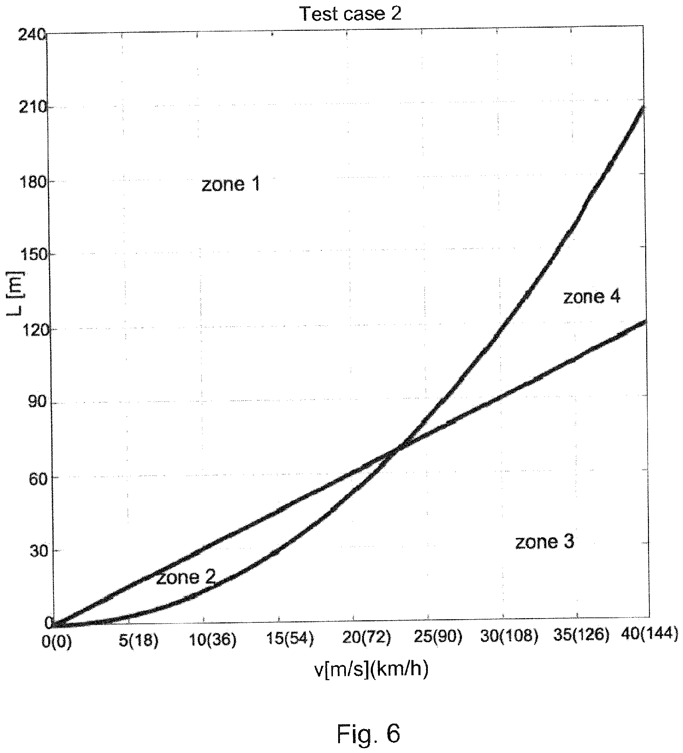

Figure 6 is a graph which, according to certain embodiments, represents a test case of a traffic light, where the period of time for yellow state is 3sec and assumes there is no blinking-green interim state. Zone 1 represents the locations of vehicle radar tracks (when the light changes from green to yellow) whose vehicles should stop before entering the junction. Zone 2 represents the locations of vehicle radar tracks (when the light changes from green to yellow) whose vehicles are not obliged to stop before entering the junction, although they can do so. Zone 3 represents the locations of vehicle radar tracks (when the light changes from green to yellow) that the vehicles should pass in the junction without stopping. Zone 4 represents the locations of vehicle radar tracks (when the light changes from green to yellow) whose vehicles should stop before entering the junction but physically are unable to do so, thus the system is typically configured for sending a trigger to the control box of the traffic light to revert to a red state in all other directions (here and elsewhere, the red state may in some use-cases be applied to only some other directions). Regarding Zone 4 , when the green state is ended, the car is typically defined as a must-stop-car, but physically the car cannot stop. In some use-cases, zone 4 exists at velocities greater than 85kph where all traffic lights should have a blinking-green state and not just yellow state, hence the driver has exceeded the allowed speed by far.

Thus, each of the graphs of figs. 3-6 shows L, according to respective embodiments, as a function of velocity V. Generally, it is appreciated that as the car approaches the junction, the point on the graph which corresponds to the car, drops toward the x axis. If the car's velocity is constant, then as the car approaches the junction, the point on the graph which corresponds to the car, drops directly downward i.e. vertically with a zero horizontal component. If the car decelerates, the point moves left as it drops i.e. the horizontal component of the point is not zero. Thus, suitable deceleration causes the car's point on the graph to move left toward the safe region or zone of the graph, whereas failure to decelerate means that the car's point on the graph eventually enters the "dangerous" region or zone.

Example: On the graph, the geometric location of all points at which it becomes apparent that the driver will enter the junction on red (will arrive at the junction at a positive velocity) even if he decelerates immediately and maximally, is the bold boundary line between the regions or zones, and below. In the graph of Fig. 4, the boundary, at 108 kph (or 30 m/sec) corresponds to 120 meters indicating that 120 meters are required to decelerate to zero, and, therefore, if 120 meters are available from the vehicle to the light, the vehicle will not enter the junction on red. As shown by the "topographical lines", more than 6 seconds are available at this point. In contrast, for 72 kph (or 20m/s), the boundary is far below 6 seconds; at 50 meters there are only 4 seconds left until the driver enters the junction.

Typically, the system intervenes (e.g. in traffic light control) in this case, unless the amount of time remaining until the driver will enter the junction, is less than the (typically fixed for each traffic light or each region or each country) amount of time required to transit from green to red (e.g. is less than the duration of the traffic light's fixed temporal sequence for transiting from green to red). So, for example, in this embodiment, if the transit time required is 6 seconds, and maximal deceleration is -3.9 m/sec2, (as in the graph of Fig. 4) is seen to verify that the system should be pre-programmed to trigger intervention (for vehicles whose velocity and distance warrant it) if the distance and velocity have certain values, since a time window of at least 6 seconds for intervention, is only available when the distance and velocity exceed those values. If, however, no green blinking state is provided, hence the transit time required (for yellow only) is, say, only 3 seconds, and maximal deceleration is -3.9 m/sec2, the graph of Fig. 4 is seen to verify that the system should be pre-programmed to trigger intervention (for vehicles whose velocity and distance warrant it) if the distance is at least certain values since a time window of at least 3 seconds for intervention, is available when the distance and velocity exceed those latter values.

It is appreciated that terminology such as "mandatory", "required", "need" and "must" refer to implementation choices made within the context of a particular implementation or application described herewithin for clarity and are not intended to be limiting since in an alternative implementation, the same elements might be defined as not mandatory and not required, or might even be eliminated altogether.

Components described herein as software may, alternatively, be implemented wholly or partly in hardware and/or firmware, if desired, using conventional techniques, and vice-versa. Each module or component or processor may be centralized in a single physical location or physical device or distributed over several physical locations or physical devices.

Included in the scope of the present disclosure, inter alia, are electromagnetic signals in accordance with the description herein. These may carry computer-readable instructions for performing any or all of the operations of any of the methods shown and described herein, in any suitable order including simultaneous performance of suitable groups of operations as appropriate; machine-readable instructions for performing any or all of the operations of any of the methods shown and described herein, in any suitable order; program storage devices readable by machine, tangibly embodying a program of instructions executable by the machine to perform any or all of the operations of any of the methods shown and described herein, in any suitable order i.e. not necessarily as shown, including performing various operations in parallel or concurrently rather than sequentially as shown; a computer program product comprising a computer useable medium having computer readable program code, such as executable code, having embodied therein, and/or including computer readable program code for performing, any or all of the operations of any of the methods shown and described herein, in any suitable order; any technical effects brought about by any or all of the operations of any of the methods shown and described herein, when performed in any suitable order; any suitable apparatus or device or combination of such, programmed to perform, alone or in combination, any or all of the operations of any of the methods shown and described herein, in any suitable order; electronic devices each including at least one processor and/or cooperating input device and/or output device and operative to perform e.g. in software any operations shown and described herein; information storage devices or physical records, such as disks or hard drives, causing at least one computer or other device to be configured so as to carry out any or all of the operations of any of the methods shown and described herein, in any suitable order; at least one program pre-stored e.g. in memory or on an information network such as the Internet, before or after being downloaded, which embodies any or all of the operations of any of the methods shown and described herein, in any suitable order, and the method of uploading or downloading such, and a system including server/s and/or client/s for using such; at least one processor configured to perform any combination of the described operations or to execute any combination of the described modules; and hardware which performs any or all of the operations of any of the methods shown and described herein, in any suitable order, either alone or in conjunction with software. Any computer-readable or machine-readable media described herein is intended to include non-transitory computer- or machine-readable media.

Any computations or other forms of analysis described herein may be performed by a suitable computerized method. Any operation or functionality described herein may be wholly or partially computer-implemented e.g. by one or more processors. The invention shown and described herein may include (a) using a computerized method to identify a solution to any of the problems or for any of the objectives described herein, the solution optionally include at least one of a decision, an action, a product, a service or any other information described herein that impacts, in a positive manner, a problem or objectives described herein; and (b) outputting the solution.

The system may, if desired, be implemented as a web-based system employing software, computers, routers and telecommunications equipment as appropriate.

Any suitable deployment may be employed to provide functionalities e.g. software functionalities shown and described herein. For example, a server may store certain applications, for download to clients, which are executed at the client side, the server side serving only as a storehouse. Some or all functionalities e.g. software functionalities shown and described herein may be deployed in a cloud environment. Clients e.g. mobile communication devices, such as smartphones, may be operatively associated with, but external to the cloud.

The scope of the present invention is not limited to structures and functions specifically described herein and is also intended to include devices which have the capacity to yield a structure, or perform a function, described herein, such that even though users of the device may not use the capacity, they are, if they so desire, able to modify the device to obtain the structure or function.

Any "if -then" logic described herein is intended to include embodiments in which a processor is programmed to repeatedly determine whether condition x, which is sometimes true and sometimes false, is currently true or false, and to perform y each time x is determined to be true, thereby to yield a processor which performs y at least once, typically on an "if and only if" basis e.g. triggered only by determinations that x is true and never by determinations that x is false.

Features of the present invention, including operations which are described in the context of separate embodiments, may also be provided in combination in a single embodiment. For example, a system embodiment is intended to include a corresponding process embodiment, and vice versa. Also, each system embodiment is intended to include a server-centered "view" or client centered "view", or "view" from any other node of the system, of the entire functionality of the system , computer-readable medium, apparatus, including only those functionalities performed at that server or client or node. Features may also be combined with features known in the art and particularly, although not limited to, those described in the Background section or in publications mentioned therein.

Conversely, features of the invention, including operations, which are described for brevity in the context of a single embodiment or in a certain order may be provided separately or in any suitable subcombination, including with features known in the art (particularly although not limited to those described in the Background section or in publications mentioned therein) or in a different order. "e.g." is used herein in the sense of a specific example which is not intended to be limiting. Each method may comprise some or all of the operations illustrated or described, suitably ordered e.g. as illustrated or described herein.

Devices, apparatus or systems shown coupled in any of the drawings may in fact be integrated into a single platform in certain embodiments or may be coupled via any appropriate wired or wireless coupling such as but not limited to optical fiber, Ethernet, Wireless LAN, HomePNA, power line communication, cell phone, Smart Phone (e.g. iPhone), Tablet, Laptop, PDA, Blackberry GPRS, Satellite including GPS, or other mobile delivery. It is appreciated that in the description and drawings shown and described herein, functionalities described or illustrated as systems and sub-units thereof can also be provided as methods and operations therewithin, and functionalities described or illustrated as methods and operations therewithin can also be provided as systems and sub-units thereof. The scale used to illustrate various elements in the drawings is merely exemplary and/or appropriate for clarity of presentation and is not intended to be limiting.

**Claims**

1. A method for reducing traffic accidents at junctions with traffic lights, the method comprising:

   using a processor for determining, at least once for at least one individual vehicle detected in a vicinity of a traffic light, whether the individual vehicle belongs to a first category of vehicles which are estimated to be capable of passing the junction before the traffic light reverts to red, or to a second category of vehicles which are estimated to be incapable of passing the junction before the traffic light reverts to red and therefore should be planning-to-stop before arriving at the junction, and/or before the traffic light reverts to red; and
   analyzing vehicles in the two categories differently, using the processor, and at least once, pursuant to said analyzing, generating an output trigger intervening in the traffic light control, thereby to reduce traffic accidents while maintaining an acceptable level of false alarms in which output triggers are generated needlessly wherein said analyzing differently comprises analyzing at least one vehicle in the second category and generating an output trigger if a vehicle in the second category, but not in the first category, is found to be going too fast to stop within the distance remaining between that vehicle to the junction edge.

2. A method according to claim 1 **characterized by** at least one of the following:

   when an output trigger is generated responsive to processing of a given vehicle approaching the junction from a given direction, the output trigger commands the traffic light to change to "red" in at least one direction other than said given direction;
   when an output trigger is generated responsive to processing of a given vehicle approaching the junction from a given direction, the output trigger commands the traffic light to change to "red" for all pedestrians; and
   when an output trigger is generated responsive to processing of a given vehicle approaching the junction from a given direction, the output trigger commands the traffic light to change to "red" in at least all directions other than said given direction.

3. A method according to any one of the preceding claims 1 or 2, wherein when the output trigger is generated responsive to processing of a given vehicle approaching the junction from a given direction, an additional output trigger is subsequently generated which commands the traffic light to revert to its normal state change protocol.

4. A method according to claim 2 or 3 **characterized by** at least one of the following:

   the output trigger commands the traffic light to change to "red" via at least one intermediate state such as yellow or blinking green; and
   the output trigger which commands the traffic light to change to "red" is provided to an existing traffic light control box which controls the traffic light.

5. A method according to claim 3 and wherein said additional trigger is generated after the given vehicle is detected to have exited the junction.

6. A method according to any one of the preceding claims wherein said determining whether the individual vehicle belongs to said first category or said second category takes into account the individual vehicle's distance from the junction.

7.  A method according to any one of the preceding claims wherein said determining whether the individual vehicle belongs to said first category or said second category takes into account the individual vehicle's velocity.

8.  A method according to any one of the preceding claims wherein a staring radar subsystem whose field of view includes at least a portion of at least one road leading to the junction, supplies all of the following parameters:

    the individual vehicle's distance from the junction and
    the individual vehicle's velocity and
    the individual vehicle's direction.

9.  A computer program product, comprising a non-transitory tangible computer readable medium having computer readable program code embodied therein, said computer readable program code adapted to be executed to implement a method for reducing traffic accidents at junctions with traffic lights, the method comprising:

    using a processor for determining, at least once for at least one individual vehicle detected in a vicinity of a traffic light, whether the individual vehicle belongs to a first category of vehicles which are estimated to be capable of passing the junction before the traffic light reverts to red, or to a second category of vehicles which are estimated to be incapable of passing the junction before the traffic light reverts to red and therefore should be planning-to-stop before arriving at the junction, and/or before the traffic light reverts to red; and
    analyzing vehicles in the two categories differently, using the processor and in some scenarios, pursuant to said analyzing, generating an output trigger intervening in the traffic light control, thereby to reduce traffic accidents while maintaining an acceptable level of false alarms in which output triggers are generated needlessly wherein said analyzing differently comprises analyzing at least one vehicle in the second category and generating an output trigger if a vehicle in the second category, but not in the first category, is found to be going too fast to stop within the distance remaining between that vehicle to the junction edge.

10. A method according to claim 1 wherein said analyzing as applied to vehicles approaching the junction from direction D, is initiated when the traffic light, in said direction D, enters an intermediate state such as yellow or blinking green.

11. A method according to claim 10 wherein an existing traffic light control box controls the traffic light and wherein said control box provides traffic light state change data indicating when the traffic light changes from one state - color - to another.

12. A system for reducing traffic accidents at junctions with traffic lights, the system comprising:

    at least one processor operative for determining, at least once for at least one individual vehicle detected in a vicinity of a traffic light, whether the individual vehicle belongs to a first category of vehicles which are estimated to be capable of passing the junction before the traffic light reverts to red, or to a second category of vehicles which are estimated to be incapable of passing the junction before the traffic light reverts to red and therefore should be planning-to-stop before arriving at the junction and/or before the traffic light reverts to red; and
    at least one controller operative for analyzing vehicles in the two categories differently and operative, in some scenarios, pursuant to said analyzing, for generating an output trigger intervening in the traffic light control, thereby to reduce traffic accidents while maintaining an acceptable level of false alarms wherein said analyzing differently comprises analyzing at least one vehicle in the second category and generating an output trigger if a vehicle in the second category, but not in the first category, is found to be going too fast to stop within the distance remaining between that vehicle to the junction edge.

13. A method according to claim 1 wherein said analyzing at least one vehicle in the second category comprises analyzing all vehicles in the second category.

14. A system according to claim 12 operative in conjunction with a staring radar subsystem.

15. A system according to claim 12 wherein when the system determines that a vehicle in the second category is going, in direction D, too fast to stop in time given its range from the junction, the traffic light is triggered to transit to red in at least one direction other than direction D.

**Patentansprüche**

1. Verfahren zum Reduzieren von Verkehrsunfällen an Kreuzungen mit Ampeln, wobei das Verfahren Folgendes umfasst:

   Verwenden eines Prozessors, um mindestens einmal für mindestens ein einzelnes Fahrzeug festzustellen, das in der Nähe einer Ampel erkannt wird, ob das einzelne Fahrzeug zu einer ersten Kategorie von Fahrzeugen gehört, von denen angenommen wird, dass sie in der Lage sind, die Kreuzung zu durchqueren, bevor die Ampel auf Rot zurückkehrt, oder zu einer zweiten Kategorie von Fahrzeugen, von denen angenommen wird, dass sie nicht in der Lage sind, die Kreuzung zu durchqueren, bevor die Ampel auf Rot zurückkehrt, und daher vor der Ankunft an der Kreuzung einen Stopp planen sollten, und/oder bevor die Ampel auf Rot zurückkehrt; und Analysieren der Fahrzeuge in den zwei Kategorien auf unterschiedliche Weise, unter Verwendung des Prozessors, und mindestens einmal, gemäß der Analyse, Erzeugen eines Ausgangsauslösers, der in die Ampelsteuerung eingreift, um dadurch Verkehrsunfälle zu reduzieren, während ein akzeptables Niveau von Fehlalarmen beibehalten wird, bei denen Ausgangsauslöser unnötig erzeugt werden,
   wobei das Analysieren auf unterschiedliche Weise das Analysieren mindestens eines Fahrzeugs in der zweiten Kategorie und Erzeugen eines Ausgangsauslösers umfasst, wenn es bei einem Fahrzeug in der zweiten Kategorie, jedoch nicht in der ersten Kategorie, festgestellt wird, dass es zu schnell fährt, um innerhalb des zwischen diesem Fahrzeug und der Kreuzungskante verbleibenden Abstands anzuhalten.

2. Verfahren nach Anspruch 1, **gekennzeichnet durch** mindestens eines der folgenden:

   wenn ein Ausgangsauslöser als Reaktion auf die Verarbeitung eines gegebenen Fahrzeugs, das sich der Kreuzung aus einer gegebenen Richtung nähert, erzeugt wird, befiehlt der Ausgangsauslöser der Ampel, in mindestens eine andere Richtung als die gegebene Richtung auf "rot" zu wechseln;
   wenn ein Ausgangsauslöser als Reaktion auf die Verarbeitung eines gegebenen Fahrzeugs, das sich der Kreuzung aus einer gegebenen Richtung nähert, erzeugt wird, befiehlt der Ausgangsauslöser der Ampel, für alle Fußgänger auf "rot" zu wechseln; und
   wenn ein Ausgangsauslöser als Reaktion auf die Verarbeitung eines gegebenen Fahrzeugs, das sich der Kreuzung aus einer gegebenen Richtung nähert, erzeugt wird, befiehlt der Ausgangsauslöser der Ampel, in mindestens alle Richtungen anders als die gegebene Richtung auf "rot" zu wechseln.

3. Verfahren nach einem der vorhergehenden Ansprüche 1 oder 2, wobei ein zusätzlicher Ausgangsauslöser anschließend erzeugt wird, der der Ampel befiehlt, zu ihrem normalen Zustandswechselprotokoll zurückzukehren, wenn der Ausgangsauslöser als Reaktion auf die Verarbeitung eines gegebenen Fahrzeugs, das sich der Kreuzung aus einer gegebenen Richtung nähert, erzeugt wird.

4. Verfahren nach Anspruch 2 oder 3, **gekennzeichnet durch** mindestens eines der folgenden:

   der Ausgangsauslöser befiehlt der Ampel, über mindestens einen Zwischenzustand, wie etwa gelb oder grün blinkend, auf "rot" zu wechseln; und
   der Ausgangsauslöser, der der Ampel befiehlt, auf "rot" zu wechseln, ist einer vorhandenen Ampelsteuerbox bereitgestellt, die die Ampel steuert.

5. Verfahren nach Anspruch 3, und wobei der zusätzliche Auslöser erzeugt wird, nachdem erkannt wurde, dass das gegebene Fahrzeug die Kreuzung verlassen hat.

6. Verfahren nach einem der vorhergehenden Ansprüche, wobei das Feststellen, ob das einzelne Fahrzeug zu der ersten Kategorie oder der zweiten Kategorie gehört, den Abstand des einzelnen Fahrzeugs von der Kreuzung berücksichtigt.

7. Verfahren nach einem der vorhergehenden Ansprüche, wobei das Feststellen, ob das einzelne Fahrzeug zu der ersten Kategorie oder der zweiten Kategorie gehört, die Geschwindigkeit des einzelnen Fahrzeugs berücksichtigt.

8. Verfahren nach einem der vorhergehenden Ansprüche, wobei ein Schauradarsubsystem, dessen Sichtfeld mindestens einen Abschnitt mindestens einer Straße, die zu der Kreuzung führt, beinhaltet, alle der folgenden Parameter liefert:
   den Abstand des einzelnen Fahrzeugs von der Kreuzung und die Geschwindigkeit des einzelnen Fahrzeugs und die Richtung des einzelnen Fahrzeugs.

9. Computerprogrammprodukt, umfassend ein nichtflüchtiges greifbares computerlesbares Medium mit darin ausgebildetem computerlesbarem Programmcode, wobei der computerlesbare Programmcode dazu ausgelegt ist, ausgeführt zu werden, um ein Verfahren zum Reduzieren von Verkehrsunfällen an Kreuzungen mit Ampeln zu implementieren, wobei das Verfahren Folgendes umfasst:

Verwenden eines Prozessors, um mindestens einmal für mindestens ein einzelnes Fahrzeug, das in der Nähe einer Ampel erkannt wird, festzustellen, ob das einzelne Fahrzeug zu einer ersten Kategorie von Fahrzeugen gehört, von denen angenommen wird, dass sie in der Lage sind, die Kreuzung zu durchqueren, bevor die Ampel auf Rot zurückkehrt, oder zu einer zweiten Kategorie von Fahrzeugen, von denen angenommen wird, dass sie nicht in der Lage sind, die Kreuzung zu durchqueren, bevor die Ampel auf Rot zurückkehrt, und daher vor der Ankunft an der Kreuzung einen Stopp planen sollten, und/oder bevor die Ampel auf Rot zurückkehrt; und Analysieren der Fahrzeuge in den zwei Kategorien auf unterschiedliche Weise, unter Verwendung des Prozessors, und in manchen Szenarien, gemäß der Analyse, Erzeugen eines Ausgangsauslösers, der in die Ampelsteuerung eingreift, um dadurch Verkehrsunfälle zu reduzieren, während ein akzeptables Niveau von Fehlalarmen beibehalten wird, bei denen Ausgangsauslöser unnötig erzeugt werden, wobei das Analysieren auf unterschiedliche Weise das Analysieren mindestens eines Fahrzeugs in der zweiten Kategorie und Erzeugen eines Ausgangsauslösers umfasst, wenn es bei einem Fahrzeug in der zweiten Kategorie, jedoch nicht in der ersten Kategorie, festgestellt wird, dass es zu schnell fährt, um innerhalb des zwischen diesem Fahrzeug und der Kreuzungskante verbleibenden Abstands anzuhalten.

10. Verfahren nach Anspruch 1, wobei das Analysieren, wenn es auf Fahrzeuge angewendet wird, die sich der Kreuzung aus Richtung D nähern, eingeleitet wird, wenn die Ampel in der Richtung D in einen Zwischenzustand eintritt, wie etwa gelb oder blinkend grün.

11. Verfahren nach Anspruch 10, wobei eine vorhandene Ampelsteuerbox die Ampel steuert und wobei die Steuerbox Ampelzustandswechseldaten bereitstellt, die angeben, wann die Ampel von einem Zustand - Farbe - zu einem anderen wechselt.

12. System zum Reduzieren von Verkehrsunfällen an Kreuzungen mit Ampeln, wobei das System Folgendes umfasst:

mindestens einen Prozessor, der betriebswirksam ist, um mindestens einmal für mindestens ein einzelnes Fahrzeug, das in der Nähe einer Ampel erkannt wird, festzustellen, ob das einzelne Fahrzeug zu einer ersten Kategorie von Fahrzeugen gehört, von denen angenommen wird, dass sie in der Lage sind, die Kreuzung zu durchqueren, bevor die Ampel auf Rot zurückkehrt, oder zu einer zweiten Kategorie von Fahrzeugen, von denen angenommen wird, dass sie nicht in der Lage sind, die Kreuzung zu durchqueren, bevor die Ampel auf Rot zurückkehrt, und daher vor der Ankunft an der Kreuzung einen Stopp planen sollten, und/oder bevor die Ampel auf Rot zurückkehrt; und mindestens eine Steuerung, die betriebswirksam ist, um Fahrzeuge in den zwei Kategorien auf unterschiedliche Weise zu analysieren, und der in manchen Szenarien, gemäß der Analyse, betriebswirksam ist, um einen Ausgangsauslöser zu erzeugen, der in die Ampelsteuerung eingreift, um dadurch Verkehrsunfälle zu reduzieren, während ein akzeptables Niveau von Fehlalarmen beibehalten wird, wobei das Analysieren auf unterschiedliche Weise das Analysieren mindestens eines Fahrzeugs in der zweiten Kategorie und Erzeugen eines Ausgangsauslösers umfasst, wenn es bei einem Fahrzeug in der zweiten Kategorie, jedoch nicht in der ersten Kategorie, festgestellt wird, dass es zu schnell fährt, um innerhalb des zwischen diesem Fahrzeug und der Kreuzungskante verbleibenden Abstands anzuhalten.

13. Verfahren nach Anspruch 1, wobei das Analysieren mindestens eines Fahrzeugs in der zweiten Kategorie das Analysieren aller Fahrzeuge in der zweiten Kategorie umfasst.

14. System nach Anspruch 12, das in Verbindung mit einem Schauradarsubsystem betriebswirksam ist.

15. System nach Anspruch 12, wobei die Ampel ausgelöst wird, um in mindestens eine andere Richtung als Richtung D zu Rot zu übergehen, wenn das System feststellt, dass ein Fahrzeug der zweiten Kategorie in Richtung D zu schnell fährt, um angesichts seiner Reichweite von der Kreuzung rechtzeitig anzuhalten.

**Revendications**

1.  Procédé de réduction des accidents de la circulation aux carrefours à feux de circulation, le procédé comprenant :

    utiliser un processeur pour déterminer, au moins une fois pour au moins un véhicule individuel détecté à proximité d'un feu de circulation, si le véhicule individuel appartient à une première catégorie de véhicules qui sont estimés être en capacité de passer le carrefour avant que le feu de circulation ne passe au rouge, ou à une deuxième catégorie de véhicules qui sont estimés être dans l'incapacité de passer le carrefour avant que le feu de circulation ne passe au rouge et qui devraient donc prévoir de s'arrêter avant d'arriver au carrefour, et/ou avant que le feu de circulation ne passe au rouge ; et
    analyser les véhicules des deux catégories différemment, à l'aide du processeur, et au moins une fois, suite à ladite analyse, générer un déclencheur de sortie intervenant dans le contrôle des feux de circulation, afin de réduire les accidents de la circulation tout en maintenant un niveau acceptable de fausses alarmes dans lesquelles des déclencheurs de sortie sont générés inutilement,
    dans lequel ladite analyse réalisée différemment comprend l'analyse d'au moins un véhicule de la deuxième catégorie et la génération d'un déclencheur de sortie si un véhicule de la deuxième catégorie, mais pas de la première catégorie, est considéré comme allant trop vite pour s'arrêter dans la distance restante entre ce véhicule et le bord du carrefour.

2.  Procédé selon la revendication 1, **caractérisé par** au moins l'un des éléments suivants :

    lorsqu'un déclencheur de sortie est généré en réponse au traitement d'un véhicule donné approchant le carrefour en provenance d'une direction donnée, le déclencheur de sortie commande au feu de circulation de passer au « rouge » dans au moins une direction autre que ladite direction donnée ;
    lorsqu'un déclencheur de sortie est généré en réponse au traitement d'un véhicule donné approchant le carrefour en provenance d'une direction donnée, le déclencheur de sortie commande le passage au « rouge » du feu de circulation pour tous les piétons ; et
    lorsqu'un déclencheur de sortie est généré en réponse au traitement d'un véhicule donné approchant le carrefour en provenance d'une direction donnée, le déclencheur de sortie commande le passage au « rouge » du feu de circulation dans au moins toutes les directions autres que ladite direction donnée.

3.  Procédé selon l'une quelconque des revendications 1 ou 2 précédentes, dans lequel, lorsque le déclencheur de sortie est généré en réponse au traitement d'un véhicule donné approchant le carrefour en provenance d'une direction donnée, un déclencheur de sortie supplémentaire est généré ultérieurement qui commande au feu de circulation de revenir à son protocole de changement d'état normal.

4.  Procédé selon la revendication 2 ou 3, **caractérisé par** au moins l'un des éléments suivants :

    le déclencheur de sortie commande au feu de circulation de passer au « rouge » via au moins un état intermédiaire tel que le jaune ou le vert clignotant ; et
    le déclencheur de sortie qui commande au feu de circulation de passer au « rouge » est fourni à un boîtier de commande de feu de circulation existant qui contrôle le feu de circulation.

5.  Procédé selon la revendication 3, et dans lequel ledit déclencheur supplémentaire est généré après qu'il a été détecté que le véhicule donné est sorti du carrefour.

6.  Procédé selon l'une quelconque des revendications précédentes, dans lequel ladite détermination de l'appartenance du véhicule individuel à ladite première catégorie ou à ladite deuxième catégorie prend en compte la distance du véhicule individuel à partir du carrefour.

7.  Procédé selon l'une quelconque des revendications précédentes, dans lequel ladite détermination de l'appartenance du véhicule individuel à ladite première catégorie ou à ladite deuxième catégorie prend en compte la vitesse du véhicule individuel.

8.  Procédé selon l'une quelconque des revendications précédentes, dans lequel un sous-système de radar d'observation, dont le champ de vision inclut au moins une partie d'au moins une route menant au carrefour, fournit tous les paramètres suivants :

la distance entre le véhicule individuel et le carrefour et
la vitesse du véhicule individuel et
la direction du véhicule individuel.

9. Produit-programme d'ordinateur, comprenant un support tangible non transitoire lisible par ordinateur comportant un code de programme lisible par ordinateur incorporé, ledit code de programme lisible par ordinateur étant adapté pour être exécuté afin de mettre en œuvre un procédé destiné à réduire les accidents de la circulation aux carrefours à feux de circulation, le procédé comprenant :

utiliser un processeur pour déterminer, au moins une fois pour au moins un véhicule individuel détecté à proximité d'un feu de circulation, si le véhicule individuel appartient à une première catégorie de véhicules qui sont estimés être en capacité de passer le carrefour avant que le feu de circulation ne passe au rouge, ou à une deuxième catégorie de véhicules qui sont estimés être dans l'incapacité de passer le carrefour avant que le feu de circulation ne passe au rouge et qui devraient donc prévoir de s'arrêter avant d'arriver au carrefour, et/ou avant que le feu de circulation ne passe au rouge ; et
analyser les véhicules des deux catégories différemment, à l'aide du processeur et dans certains scénarios, suite à ladite analyse, générer un déclencheur de sortie intervenant dans le contrôle des feux de circulation, afin de réduire les accidents de la circulation tout en maintenant un niveau acceptable de fausses alarmes dans lesquelles des déclencheurs de sortie sont générés inutilement,
dans lequel ladite analyse réalisée différemment comprend l'analyse d'au moins un véhicule de la deuxième catégorie et la génération d'un déclencheur de sortie si un véhicule de la deuxième catégorie, mais pas de la première catégorie, est considéré comme allant trop vite pour s'arrêter dans la distance restante entre ce véhicule et le bord du carrefour.

10. Procédé selon la revendication 1, dans lequel ladite analyse, appliquée aux véhicules approchant le carrefour en provenance de la direction D, est déclenchée lorsque le feu de circulation, dans ladite direction D, entre dans un état intermédiaire tel que le jaune ou le vert clignotant.

11. Procédé selon la revendication 10, dans lequel un boîtier de commande de feux de circulation existant contrôle le feu de circulation et dans lequel ledit boîtier de commande fournit des données sur les changements d'état du feu de circulation indiquant quand le feu de circulation passe d'une couleur d'état à une autre.

12. Système de réduction des accidents de la circulation aux carrefours à feux de circulation, le système comprenant :

au moins un processeur opérationnel pour déterminer, au moins une fois pour au moins un véhicule individuel détecté à proximité d'un feu de circulation, si le véhicule individuel appartient à une première catégorie de véhicules qui sont estimés être en capacité de passer le carrefour avant que le feu de circulation ne passe au rouge, ou à une deuxième catégorie de véhicules qui sont estimés être dans l'incapacité de passer le carrefour avant que le feu de circulation ne passe au rouge et qui devraient donc prévoir de s'arrêter avant d'arriver au carrefour, et/ou avant que le feu de circulation ne passe au rouge ; et
au moins un contrôleur opérationnel pour analyser des véhicules dans les deux catégories différemment et opérationnel, dans certains scénarios, suite à ladite analyse, pour générer un déclencheur de sortie intervenant dans le contrôle des feux de circulation, afin de réduire les accidents de la circulation tout en maintenant un niveau acceptable de fausses alarmes dans lesquelles des déclencheurs de sortie sont générés inutilement,
dans lequel ladite analyse réalisée différemment comprend l'analyse d'au moins un véhicule de la deuxième catégorie et la génération d'un déclencheur de sortie si un véhicule de la deuxième catégorie, mais pas de la première catégorie, est considéré comme allant trop vite pour s'arrêter dans la distance restante entre ce véhicule et le bord du carrefour.

13. Procédé selon la revendication 1, dans lequel ladite analyse d'au moins un véhicule de la deuxième catégorie comprend l'analyse de tous les véhicules de la deuxième catégorie.

14. Système selon la revendication 12, étant opérationnel conjointement avec un sous-système de radar d'observation.

15. Système selon la revendication 12, dans lequel, lorsque le système détermine qu'un véhicule de la deuxième catégorie va, dans la direction D, trop vite pour s'arrêter à temps compte tenu de sa distance par rapport au carrefour, le feu de circulation est déclenché pour passer au rouge dans au moins une direction autre que la direction D.

| Provide staring radar (operative to continuously scan entire region of interest e.g. junction and roads ( e.g. 500meters to each direction) leading into the junction- rather than scanning the region of interest and imaging only a portion thereof at any given time). Plural staring radars may be required in order to maintain angular coverage of all directions of the junction. | ⌐10 |

| Install staring radar at a high point above the road intersection e.g. atop a traffic light or atop a dedicated pole. | ⌐12 |

| Provide C2 subsystem which may communicate with the existing traffic control box which controls the color of the light in each direction, in accordance with a given policy re traffic light states. | ⌐16 |

| In real time the C2 subsystem detects hazardous situations and triggers the existing traffic control box to engage red state sequence to all other directions. | ⌐18 |

## Fig. 1a

Staring radar system continually collects raw data. |~100

Continuously scan junction vicinity to detect vehicles approaching the junction and track each detected vehicle. |~110

Determine whether or not the vehicle can clear the junction safely e.g. by determining whether vehicle's de facto distance from junction is or is not shorter than the distance the vehicle will have time to cover (typically assuming constant velocity) until the light turns red. |~130

Optionally, according to certain embodiments, for each car which is known to be able to safely pass the junction before red if it persists at its current velocity, monitor to ensure the car is going fast enough to pass the junction and/or does not decrease its velocity, since the car may not persist at its current velocity. |~135

Otherwise, or if L exceeds $t_1 \cdot V$ or $t_2 \cdot V$ (for type 1, type 2 traffic light respectively) , perform method of Fig. 2a or otherwise monitor the vehicle to determine whether vehicle can decelerate and stop in time to avoid entering junction on red |~140

Fig. 1b

Continue tracking the vehicle, and continuously re-check to ensure the vehicle RADAR track distance L exceeds $\dfrac{v_t^2 - v^2}{2 \cdot a}$

~140a

As soon as (and/or if) a check establishes that L no longer exceeds $\dfrac{v_t^2 - v^2}{2 \cdot a}$ - estimate how much time, t, remains until a red light violation will occur, assuming constant e.g. maximum or aggressive deceleration rate

~140b

If $t \geq t_1$ or $t \geq t_2$ (depending on whether traffic light is type 1 or type 2 i.e. whether traffic light has/lacks blinking green state), intervene in traffic light's operation e.g. by performing the method of Fig. 2b. Otherwise, the method may end.

~140b

## Fig. 2a

Send trigger or command to C2 of traffic light to transit the traffic light to red, at least in all other directions (including for pedestrians). A traffic light typically transits to red via its usual intermediate states (if any)

~150

After a safe time interval (e.g. a time interval which has allowed the offending driver who caused the intervention, to exit the junction, or RADAR keep tracked the offender and found it exited the junction), re-activate the traffic light normally, in all directions

~160

Return to operation 130

~170

## Fig. 2b

Fig. 3

Fig. 4

24

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050046597 A, Hutchison
- JP H0546897 A
- US 7317406 B2
- CN 104575033 A
- US 7864072 B2
- US 9349288 B2
- US 9558666 B2
- KR 20160092959 A

- US 2005156757 A1
- US 2014307087 A1
- CN 106023618 A
- US 2006181433 A1
- US 2005046597 A1
- US 6100819 A
- US 2014032089 A1